# EUROPEAN PATENT SPECIFICATION

(11) **EP 3 012 441 B1**
(45) Date of publication and mention of the grant of the patent: **19.09.2018**
(21) Application number: 15188039.0
(22) Date of filing: 02.10.2015
(51) Int. Cl.: F02D 41/02, F02D 41/40, F02D 41/14, F01N 3/20

(54) **EXHAUST AFTER TREATMENT APPARATUS FOR INTERNAL COMBUSTION ENGINE**
ABGASNACHBEHANDLUNGSVORRICHTUNG FÜR BRENNKRAFTMASCHINE
APPAREIL DE POST-TRAITEMENT D'ÉCHAPPEMENT POUR MOTEUR À COMBUSTION INTERNE

(30) Priority: 23.10.2014 JP 2014215920; 07.09.2015 JP 2015175460
(43) Date of publication of application: 27.04.2016
(73) Proprietor: Mitsubishi Jidosha Kogyo K.K., Tokyo 108-8410 (JP)
(72) Inventor: Tsuda, Daisuke, 108-8410 Tokyo (JP)
(74) Representative: Vossius & Partner Patentanwälte Rechtsanwälte mbB

(56) References cited:
- EP-A1- 1 978 219
- EP-A2- 1 431 549
- EP-A2- 1 515 015
- WO-A1-2005/088109
- JP-A- 2006 274 907
- US-A1- 2004 139 738

## Description

### TECHNICAL FIELD

This disclosure relates to an exhaust after treatment apparatus for internal combustion engine, more specifically to an exhaust after treatment apparatus for an internal combustion engine to perform temperature increasing control of an exhaust after treatment device provided on the an exhaust passage.

### BACKGROUND

There is a known exhaust after treatment apparatus for an internal combustion engine which includes an exhaust after treatment device provided on an exhaust passage, and an fuel supplying device for supplying a fuel component to the exhaust after treatment device, and which is configured to supply the fuel component to the exhaust after treatment device. Such exhaust after treatment apparatus increases the temperature of the exhaust after treatment device through supplying the fuel component to the exhaust after treatment device to regenerate the exhaust after treatment device. When the exhaust gas temperature becomes lower than a predetermined temperature (deactivation determination temperature), the engine is determined to be in an operating state where the active state of the exhaust after treatment device cannot be maintained, and supply of the fuel component is stopped (for example, see the publication of Japanese Patent No. 4428974 as Patent Document 1).

### SUMMARY

The exhaust after treatment apparatus for an internal combustion engine disclosed in the Patent Document 1 (JP 4428974 B) continues to supply the fuel component until it is determined that the internal combustion engine is an operating state where the active state of the exhaust after treatment device cannot be maintained. Therefore, the fuel component supplied immediately before the determination that the operating state is such that the active state of the exhaust after treatment device cannot be maintained becomes excessive and turns to white smoke to be discharged outside.

On the other hand, if the deactivation determination temperature is set higher, it may be possible to suppress the excess of the fuel component supplied immediately before the exhaust gas temperature becomes the deactivation determination temperature or less. In such a case, however, even when the operating state is such that the active state of the exhaust after treatment device can be maintained, the fuel component is suppose not to be supplied, and the exhaust after treatment device cannot be regenerated efficiently.

In view of such problem, an object of at least one embodiment of the present invention it to provide an exhaust after treatment apparatus for an internal combustion engine capable of suppress excess of the fuel component when it is determined that the internal combustion engine is in an operating state where the exhaust after treatment device is not maintainable.

An exhaust after treatment apparatus for an internal combustion engine according to at least one embodiment of the present invention comprises: an exhaust after treatment device provided on an exhaust passage; and a fuel supplying device for supplying a fuel component to the exhaust after treatment device, where the exhaust after treatment apparatus is configured to perform temperature increasing control of the exhaust after treatment device by supplying the fuel component from the fuel supplying device. The exhaust after treatment apparatus further comprises: an exhaust gas temperature detecting device for detecting an exhaust gas temperature in the exhaust passage; an operating state determining unit configured, when given conditions including a condition that the exhaust gas temperature is lower than a given temperature are satisfied, to determine that the internal engine is in an operating state where an active state of the exhaust after treatment device (81) is not maintainable; a fuel supply amount calculating unit configured to calculate a supply amount of the fuel component for the temperature increasing control so that the supply amount becomes larger as the exhaust gas temperature detected by the exhaust gas temperature detecting device becomes lower during the temperature increasing control; a limited fuel supply amount calculating unit configured to calculate a limited supply amount of the fuel component for the temperature increasing control so that the limited supply amount becomes smaller as the exhaust gas temperature detected by the exhaust gas temperature detecting device becomes lower during the temperature increasing control; and a fuel supply amount setting unit for setting a supply amount of the fuel component to be supplied by the fuel supplying device on the basis of the supply amount calculated by the fuel supply amount calculating unit and the limited supply amount calculated by the limited fuel supply amount calculating unit. The fuel supply amount setting unit is configured to set the supply amount of the fuel component to be supplied to the smaller one between the supply amount calculated by the fuel supply amount calculating unit and the limited supply amount calculated by the limited fuel supply amount calculating unit when the operating state determining unit determines that the internal engine is in the operating state where the active state of the exhaust after treatment device is not maintainable during the temperature increasing control.

According to the embodiment, when the operating state determining unit determines that the internal combustion engine is in the operating state where the active state of the exhaust after treatment device cannot be maintained after supply of the fuel component in the supply amount calculated by the fuel supply amount calculating unit during the temperature increasing control, the fuel supply amount setting unit sets the supply amount of the fuel component to be supplied to the smaller one between the supply amount calculated by the fuel supply amount calculating unit and the limited supply amount calculated by the limited fuel supply amount calculating unit. It is thereby possible to regenerate the exhaust after treatment device efficiently and to suppress excess of the fuel component even when it is determined that the internal combustion engine is in an operating state where the exhaust after treatment device cannot be maintained.

In some embodiments, the limited fuel supply amount calculating unit is configured to correct the supply amount of the fuel component depending on the operating state of the internal combustion engine.

With the above configuration, the limited fuel supply amount calculating unit corrects the supply amount of the fuel component depending on the operating state of the internal combustion engine, whereby it is possible to adjust the supply amount of the fuel component depending upon the operating state of the internal combustion engine.

In some embodiments, the exhaust after treatment apparatus for an internal combustion engine further comprises an exhaust gas flow rate detecting device for detecting an exhaust gas flow rate in the exhaust passage. The limited fuel supply amount calculating unit is configured to correct the supply amount of the fuel composition with a flow rate factor corresponding to the exhaust gas flow rate detected by the exhaust gas flow rate detecting device.

With the above configuration, the limited fuel supply amount calculating unit corrects the supply amount of the fuel composition with a flow rate factor corresponding to the exhaust gas flow rate detected by the exhaust gas flow rate detecting device, whereby it is possible to adjust the supply amount of the fuel component depending upon increase or decrease in the exhaust gas flow rate.

In some embodiments, the limited fuel supply amount calculating unit is configured to correct the supply amount of the fuel component with a vehicle speed factor corresponding to a speed of a vehicle having the internal combustion engine.

With the above configuration, when the internal combustion engine function as a motor for a vehicle, the limited fuel supply amount calculating unit corrects the supply amount of the fuel component with a vehicle speed factor corresponding to a speed of the vehicle, whereby it is possible to adjust depending on increase or decrease in the vehicle speed.

In some embodiments, the exhaust after treatment apparatus for an internal combustion engine further comprises a fuel supply stopping unit for stopping supply of the fuel component by the fuel supplying device. The fuel supply sopping unit is configured to stop supply of the fuel component when the exhaust gas temperature detected by the exhaust gas temperature detecting device is lower than an exhaust gas temperature at which the exhaust after treatment device becomes inactive.

With the above configuration, the fuel supply stopping unit stops supply of the fuel component when the exhaust gas temperature detected by the exhaust gas temperature detecting device is lower than an exhaust gas temperature at which the exhaust after treatment device becomes inactive, whereby it is possible to stop supply of the fuel component when the exhaust after treatment device is inactive.

In some embodiments, the supply amount of the fuel component is corrected by the limited fuel supply amount calculating unit so that a reduction of the fuel component becomes larger as the exhaust gas flow rate becomes higher. In some embodiments, the supply amount of the fuel component is corrected by the limited fuel supply amount calculating unit so that a reduction of the fuel component becomes larger as the vehicle speed becomes higher.

The amount of heat removed from the exhaust after treatment device by exhaust gas flow or wind caused by the vehicle movement becomes larger as the exhaust gas flow rate becomes larger or as the vehicle speed is higher. Therefore, by correcting the reduction amount of the fuel component depending on the vehicle speed or the exhaust gas flow rate, it is possible to suppress excess of the fuel component.

According to at least one embodiment of the present invention, it is possible to regenerate the exhaust after treatment device efficiently, and it is possible to suppress excess of the fuel component even when it is determined that the internal combustion engine is in an operating state where the active state of the exhaust after treatment device cannot be maintained.

### BRIEF DESCRIPTION OF DRAWINGS

Fig. 1 is a schematic diagram illustrating a diesel engine to which an exhaust after treatment apparatus according to an embodiment of the present invention is applied.

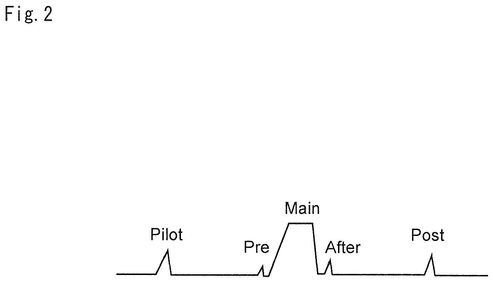

Fig. 2 is a diagram showing a fuel injection pattern of the fuel injecting device shown in Fig. 1.
Fig. 3 is a construction block diagram of a control for the exhaust after treatment apparatus.
Fig. 4 is a flowchart of a post-injection amount control of the exhaust after treatment apparatus shown in Fig. 3.
Fig. 5 is a time chart showing a result of a post-injection amount control shown in Fig. 4.
Fig. 6 is a chart showing a low injection amount map.
Fig. 7 is a chart showing a correction factor map.

### DETAILED DESCRIPTION

Embodiments of the present invention will now be described in detail with reference to the accompanying drawings. In the following, an exhaust after treatment apparatus for a diesel engine functioning as a motor of a vehicle will be described as an example.

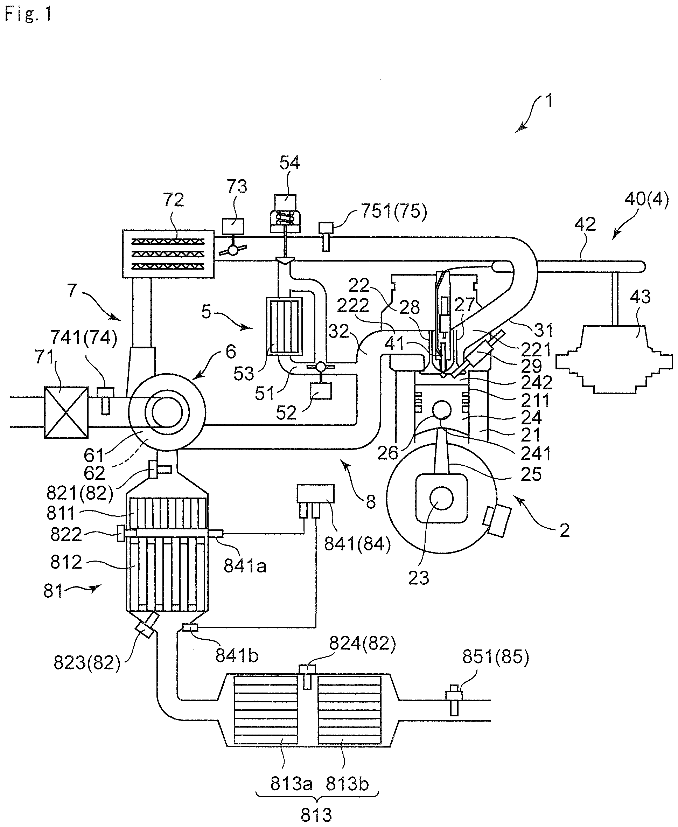

Fig. 1 is a schematic diagram illustrating a diesel engine to which an exhaust after treatment apparatus according to an embodiment of the present invention is applied.

As illustrated in Fig. 1, the internal combustion engine to which an exhaust after treatment apparatus according to an embodiment of the present invention is a common rail type diesel engine 1 which includes an engine body 2, a fuel supplying device 4, an EGR device 5 and a turbocharger 6.

The engine body 2 includes a cylinder block 21 and a cylinder head 22 fixed on the cylinder block 21. The cylinder block 21 has a plurality of cylinders 211 arranged along the front-back direction of a vehicle, and a common crankshaft 23 is rotatably supported in an area below the cylinders 211. Each of the cylinders 211 has a cylindrical shape, and a piston 24 is reciprocatably accommodated in each of the cylinders 211, along the up-down direction. The piston 24 has a cylindrical shape of which head portion is closed, and the piston 24 has a pin hole 241 provided along a radial direction through the middle portion thereof. In the middle portion of the piston 24, an end (small end) of a connecting rod 25 is accommodated, and the end of the connecting rod 25 is connected to the piston 24 by a piston pin 26 inserted through the pin hole 241. On the upper side of the head portion of the piston, a combustion chamber 242 is formed.

The crankshaft 23 is for converting, along with the connecting rod 25, the reciprocating motion (downward motion) of the piston 24 to a rotating motion, and has a crank pin (not shown) extending along a direction parallel to the axis line through the rotational center of the crankshaft 23. To the crank pin, the other end (large end) of the connecting rod 25 is connected. The reciprocating motion of the piston 24 is thereby be converted to the rotating motion of the crank shaft.

The cylinder head 22 has intake ports 221 provided for the respective cylinders 211, and the intake ports 221 are connected to an intake manifold (multiply branched pipe) 31. Air supplied to the intake manifold 31 is thereby distributed substantially evenly to the respective intake ports 221. Further, the cylinder head 22 has exhaust ports 222 provided for the respective cylinders 211, and the exhaust ports 222 are connected to an exhaust manifold (multiply branched pipe) 32. Exhaust gas discharged from the respective exhaust ports 222 is thereby collected in the exhaust manifold.

Each of the intake ports 221 is provided with an intake valve 27 for opening and closing the intake port 221. During the intake stroke, the intake port 221 is opened so that air can flow into the cylinder 211 from the intake port 221, while during the compression stroke, expansion stroke and exhaust stroke, the intake port 221 is closed. Each of the exhaust ports 222 is provided with an exhaust valve 28 for opening and closing the exhaust port 222. During the exhaust stroke, the exhaust port 222 is opened and exhaust gas can be discharged from the exhaust port 222, while during the intake stroke, compression stroke and expansion stroke, the exhaust port 222 is closed. The combustion chamber is thereby be closed during the compression stroke and the expansion stroke.

The cylinder head 22 is provided with a grow plug 29 for each cylinder 211. The grow plug 29 is an auxiliary heat source to assist the starting during a cold time, and it is disposed at a position where it may have contact with the fuel injected from the fuel supplying device 4.

The fuel supplying device 4 is for injecting a prescribed amount of the fuel into the cylinder 211 at a prescribed timing. In this embodiment, a common rail type fuel injection device 40 is used as the fuel supplying device 4. The fuel injection device 40 includes injectors 41 provided for respective cylinders 211, a common rail 42 shared by the respective injectors 41 and a high pressure fuel pump 43 for supplying a high-pressure fuel to the common rail 42. The fuel injecting device 40 is capable of injecting fuel multiple times during a combustion cycle, and the injectors 41 of the embodiment are capable of performing pilot injection, pre-injection, main injection, after injection and post-injection separately during a combustion cycle. It is thereby possible that the injectors 41 perform injection (post-injection) of the fuel at a timing such that the fuel is discharged to the exhaust passage 8 without contributing to combustion in the cylinders 211.

The EGR device 5 is for extracting a part of exhaust gas combusted in the engine body 2 (combustion chamber 242), introducing the part to the exhaust side, and then allowing intake of the part, and it includes an EGR passage (exhaust gas recirculation passage) 51. An end portion of the EGR passage 51 is connected to the exhaust manifold 32 or the exhaust passage 8 at a position between the both ends of the exhaust manifold 32 or the exhaust passage 8, and the other end portion of the EGR passage 51 is connected to the intake passage 7 at a position between the both ends of the intake passage 7. A part of the exhaust gas is thereby introduced through the EGR passage 51 to the intake passage 7 (exhaust gas recirculation).

On the EGR passage 51 provided are an exhaust-side EGR valve 52, an EGR cooler 53 and an intake-side EGR valve 54, in this order from the upstream (the exhaust passage side) to the downstream (the intake passage side). The exhaust-side EGR valve 52 is for regulate the flow rate of the exhaust gas to be introduced to the EGR passage 51, and a selected amount of the exhaust gas is introduced to the EGR passage 51 depending on the opening degree. The EGR cooler 53 is for cooling the exhaust gas introduced to the EGR passage, and the exhaust gas introduced to the EGR passage 51 is cooled when passing through the EGR cooler 53. The intake-side EGR valve 54 is for regulating the flow rate of the exhaust gas to be introduced to the intake passage 7, and a selected amount of the exhaust gas is introduced to the intake passage 7 depending on the opening degree.

The turbocharger 6 is for supplying compressed air to the engine body 2 (combustion chamber 242). The turbocharger 6 includes a compressor 61 provided on the intake passage 7 and an exhaust gas turbine 62 provided on the exhaust passage 8, where the compressor wheel (not shown) of the compressor 61 and the turbine wheel of the exhaust gas turbine 62 are arranged coaxially. By such configuration, exhaust gas discharged from the engine body 2 (combustion chamber 242) is allowed to rotate the turbine wheel to drive the compressor wheel. Air (intake air) in the intake passage7 is thereby be compressed by the compressor 61 and then supercharged to the engine body 2 (combustion chamber 242).

The intake passage 7 is for supplying air to the engine body 2 (combustion chamber 242), and on the intake passage 7, an air cleaner 71 is provided at the uppermost stream part, and downstream thereof, the compressor 61 of the turbocharger 6, an intercooler 72, an intake throttle 73 and the intake-side EGR valve 54 are provided.

The intake passage 7 is provided with an intake air amount measuring device 74 and an intake air temperature measuring device 75.

The intake air amount measuring device 74 is for measuring the intake air amount to the intake passage 7. In the embodiment, as the intake air amount measuring device 74, an air flow sensor 741 is provided between the air cleaner and the compressor 61 of the turbocharger 6.

The intake air temperature measuring device 75 is for measuring the temperature of the intake air introduced to the intake passage 7. In the embodiment, as the intake air temperature measuring device 75, an intake air temperature sensor 751 is provided downstream of the intake-side EGR valve 54.

The exhaust passage 8 is for discharging exhaust gas from the engine body 2 (combustion chamber 242), and on the exhaust passage 8, the exhaust gas turbine 62 of the turbocharger 6 and an exhaust after treatment device 81 are provided downstream of the exhaust manifold 32.

The exhaust after treatment device 81 is for purifying the exhaust gas by removing hydrocarbons (HC), particulate matters (PM) and nitrogen oxides (NOx) contained in the exhaust gas discharged from the engine body 2 (combustion chamber 242). In the embodiment, the exhaust after treatment device 81 includes an oxidation catalyst 811, a particulate collecting filter (DPF: diesel particulate filter) 812 and a NOx reduction catalyst 813.

The oxidation catalyst 811 is for oxidizing hydrocarbons (HC) contained in the exhaust gas, and it is provided in the exhaust passage 8 where the exhaust gas discharged from the cylinders 211 flows.

The particulate collecting filter (DPF) 812 is for collecting particulate matters (PM) contained in the exhaust gas having passed through the oxidation catalyst 811, and is provided downstream of the oxidation catalyst 811.

The NOx reduction catalyst 813 is for reducing nitrogen oxides (NOx) contained in the exhaust gas having passed through the particulate collecting filter 812 to water (H₂O) and nitrogen (N₂). In the embodiment, the NOx reduction catalyst 813 includes an upstream catalyst 813a and a downstream catalyst 813b.

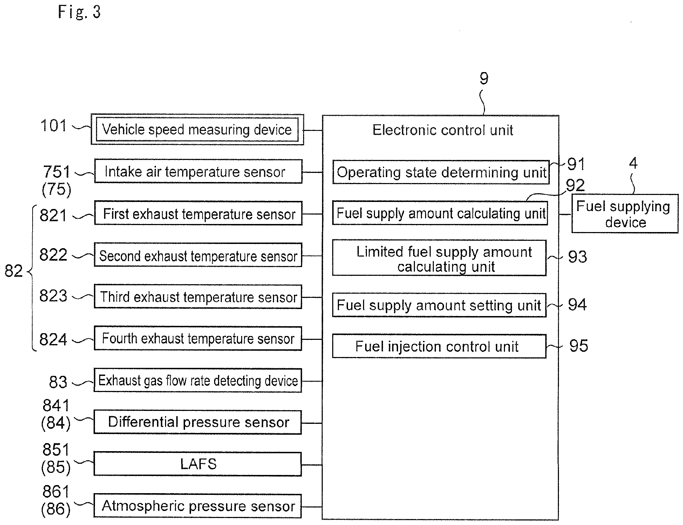

Further, on the exhaust passage 8, an exhaust gas temperature detecting device 82, an exhaust gas flow rate detecting device 83 (shown in Fig. 3), a differential pressure measuring device 84, and an air-fuel ratio measuring device 85 are provided.

The exhaust gas temperature detecting device 82 is for detecting a temperature of the exhaust gas which may increase the temperature of the oxidation catalyst 811. In the embodiment, the exhaust gas temperature detecting device 82 includes first to fourth exhaust temperature sensors 821 to 824. The first exhaust temperature sensor 821 is for detecting a temperature of the exhaust gas having passed through the exhaust gas turbine 62, and is provided between the exhaust gas turbine 62 and the oxidation catalyst 811. The second exhaust temperature sensor 822 is for detecting a temperature of the exhaust gas having passed through the oxidation catalyst 811, and is provided between the oxidation catalyst 811 and the particulate collecting filter 812. The third exhaust temperature sensor 823 is for detecting a temperature of the exhaust gas having passed through the particulate collecting filter 812, and is provided downstream of the particulate collecting filter 812. The fourth exhaust temperature sensor 824 is for detecting a temperature of the exhaust gas passing through the NOx reduction catalyst 813, and is provided between the upstream catalyst 813a and the downstream catalyst 813b.

The exhaust gas flow rate detecting device 83 (shown in Fig. 3) is for detecting the flow rate of the exhaust gas discharged from the cylinder 211. The exhaust gas flow rate detecting device 83 may include an air flow sensor 741, or the exhaust gas flow rate detecting device 83 may calculate the exhaust gas flow rate from the operating state of the engine, such as the rotational speed or the load.

The differential pressure measuring device 84 is for measuring the differential pressure between the pressure upstream of the particulate collecting filter 812 and the pressure downstream of the particulate collecting filter 812, and is used as an index for the amount of the particulate matter (PM) collected by and accumulated in the particulate collecting filter 812. In the embodiment, the differential pressure measuring device 84 includes a differential pressure sensor 841 having detection elements 841a, 841b provided upstream and downstream, respectively, of the particulate collecting filter 812.

The air-fuel ratio measuring device 85 is for measuring a continuous air-fuel ratio, and in the embodiment, the device includes a linear air-fuel ratio sensor (LAFS) 851 provided downstream of the NOx reduction catalyst 813.

The atmospheric pressure measuring device 86 (shown in Fig. 3) is for measuring the atmospheric pressure, and the device may include an atmospheric pressure sensor 861 provided at a selected position.

Fig. 3 is a construction block diagram of a control for the exhaust after treatment apparatus illustrated in Fig. 1. The exhaust after treatment apparatus of the embodiment is configured to supplying the fuel component from the fuel supplying device 4 to the cylinder 211 to combust the fuel component with the oxidation catalyst 811, thereby to regenerate the particulate collecting filter 812. Control for the exhaust after treatment apparatus of the embodiment is performed by the electronic control unit 9 shown in Fig. 3.

The electronic control unit 9 includes a CPU (not shown) for executing various processing, a ROM (not shown) for storing programs and data for the control, a RAM (not shown) for temporarily store processing results by the CPU, and an input/output port (not shown) for receiving input signals and/or sending output signals from and to the outside. The operating state determining unit 91, the fuel supply amount calculating unit 92, the limited fuel supply amount calculating unit 93, the fuel supply amount setting unit 94 and the fuel injection control unit 95, which are shown in Fig. 3, are composed by the above-described components.

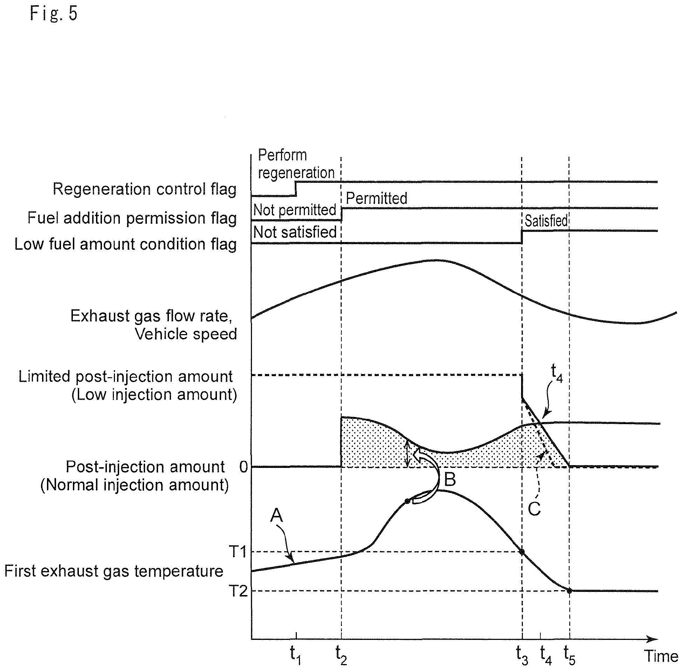

The operating state determining unit 91 is for determining whether the operating state is such that the active state of the oxidation catalyst 811 cannot be maintained. Specifically, the operating state determining unit 91 determines that the internal combustion engine is in the operating state where the active state of the oxidation catalyst 811 cannot be maintained when prescribed conditions including a condition that a first exhaust gas temperature is lower than a prescribed temperature (deactivation determination temperature; 'Tl' in Fig. 5) are satisfied. Upon determining that the internal combustion engine is in a state where the active state of the oxidation catalyst 811 cannot be maintained, the operating state determining unit 91 sets a low injection amount condition flag 'ON'.

The fuel supply amount calculating unit 92 is for calculating the supply amount of the fuel component so as to increase the exhaust gas temperature depending on the exhaust gas temperature detected by the exhaust gas temperature detecting device 82, and it calculates the supply amount of the fuel component based on the first exhaust gas temperature detected by the first exhaust temperature sensor 821 and the second exhaust gas temperature detected by the second exhaust temperature sensor 822. More specifically, the fuel supply amount calculating unit 92 calculates the supply amount of the fuel component by using a constant by which the first and second exhaust temperatures and the supply amount of the fuel component are related to each other. The constant is defined so that the supply amount of the fuel component becomes smaller as the first exhaust gas temperature and the second exhaust gas temperature become higher, and the supply amount of the fuel component becomes larger as the first exhaust gas temperature and the second exhaust gas temperature become lower.

The limited fuel supply amount calculating unit 93 is for calculating the fuel injection amount (supply amount of the fuel component) under a low injection condition (i.e. under a condition where the low injection amount condition flag is 'ON'), and it calculates the supply amount of the fuel component so as to limit and decrease the supply amount of the fuel component when the operating state is such that the active state of the oxidation catalyst 811 is not maintainable.

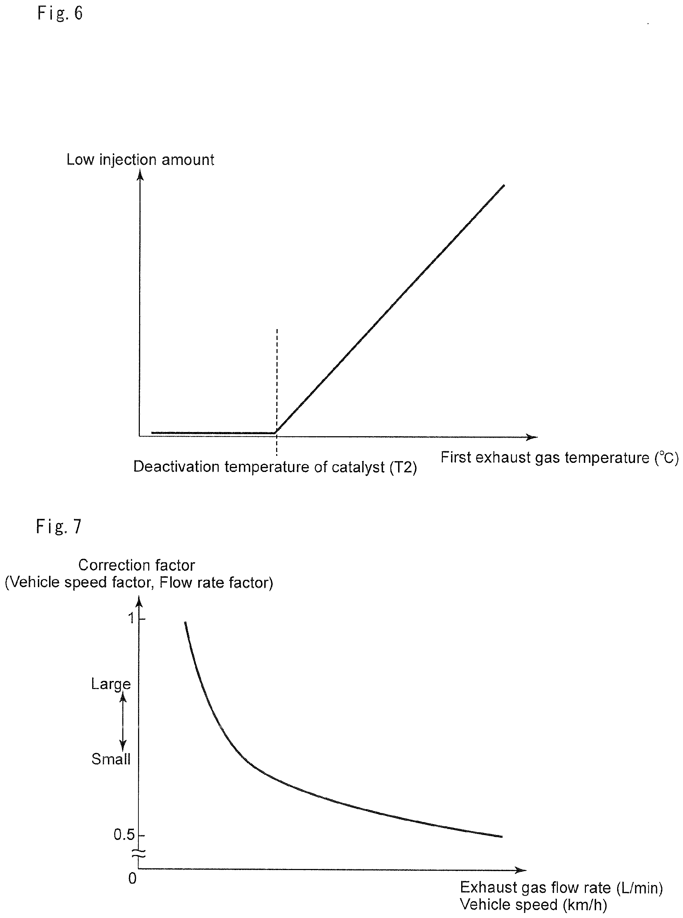

As is the case with the fuel supply amount calculating unit 92, the limited fuel supply amount calculating unit 93 calculates the supply amount of the fuel component based on the first exhaust gas temperature detected by the first exhaust temperature sensor 821 and the second exhaust gas temperature detected by the second exhaust temperature sensor 822. More specifically, when the low injection amount condition flag is 'ON', by using a low injection amount map (shown in Fig. 6) where the relationship between the first exhaust gas temperature and the fuel supply amount is defined, the limited fuel supply amount calculating unit 93 calculates the supply amount of the fuel component by specifying the first exhaust gas temperature and the second exhaust gas temperature.

The chart of Fig. 6 is a sketch of a low injection amount map. The horizontal axis represent the first exhaust gas temperature (°C), and the vertical axis represents the supply amount of the fuel component under a state where the low injection amount condition flag is 'ON' (under a condition where the active state of the oxidation catalyst 811 is not maintainable).

The low injection amount map, which may be in the form of a table, is defined so that the supply amount of the fuel component becomes smaller as the first exhaust gas temperature and the second exhaust gas temperature become lower, and the supply amount of the fuel component becomes zero when the first exhaust gas temperature is at a temperature (deactivation temperature; see T2 in Fig. 5) at which the active state of the oxidation catalyst 811 cannot be maintained, or when the second exhaust gas temperature is at a temperature (deactivation temperature) at which it is determined that the oxidation catalyst 811 is not in the active state. The limited fuel supply amount calculating unit 93 may thereby function as the fuel supply stopping unit for stopping supply of the fuel component when the exhaust gas temperature detected by the exhaust gas temperature detecting device 82 is lower than the exhaust gas temperature (deactivation temperature) at which the exhaust after treatment device 81becomes inactive.

When the low injection flag is 'OFF', the low injection amount map is not necessarily used. The limited fuel supply amount calculating unit 93 may correct the fuel supply amount calculated based on the low injection amount map, depending on the operating state of the internal combustion engine (e.g. the exhaust gas flow rate) or the operating state of the vehicle (e.g. the vehicle speed).

For example, the correction may be such that reduction amount of the fuel component becomes larger as the exhaust gas flow rate becomes larger, or such that the reduction amount of the fuel component becomes larger as the vehicle speed becomes higher.

As the exhaust gas flow rate becomes larger, or, as the vehicle speed becomes higher, the amount of heat removed from the exhaust after treatment device 81 by the exhaust gas flow or wind caused by the vehicle movement becomes larger. Therefore, by correcting the reduction amount of the fuel component to be supplied depending on the vehicle speed of the exhaust gas flow rate, it is possible to suppress excess of the fuel component.

The fuel supply amount setting unit 94 is for setting the supply amount of the fuel component to be supplied by the fuel supplying device 4. When the low injection amount condition flag is 'OFF', the fuel supply amount setting unit 94 sets the supply amount of the fuel component to be supplied by the fuel supplying device 4 to the supply amount of the fuel component calculated by the fuel supply amount calculating unit 92. On the other hand, when the low injection amount condition flag is 'ON', the fuel supply amount setting unit 94 sets the supply amount of the fuel component to the smaller one between the supply amount calculated by the fuel supply amount calculating unit 92 and the limited supply amount calculated by the limited fuel supply amount calculating unit 93.

The fuel injection control unit 95 is for allowing the fuel supplying device 4 to supply the supply amount of the fuel component set by the fuel supply amount setting unit 94, at a timing such that the fuel component is discharged to the exhaust passage without contributing to combustion in the cylinders 211.

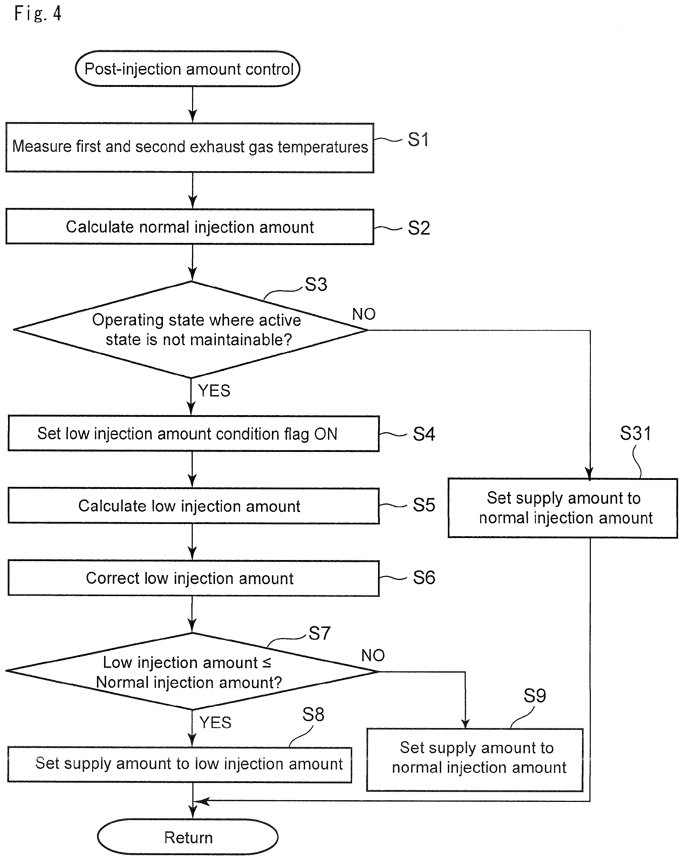

Fig. 4 is a flowchart of a post-injection amount control of the exhaust after treatment apparatus shown in Fig. 3, and Fig. 5 is a time chart showing a result of a post-injection amount control shown in Fig. 4.

As shown in Fig. 5, when the regeneration control flag is set 'ON' (i.e. 'Perform regeneration'; at time t₁ shown in Fig. 5), after injection is additionally performed in order to increase the catalyst temperature. The after injection is a fuel injection at a timing where the fuel ignites after the main injection, and the exhaust gas temperature thereby begins to increase (see 'A' in Fig. 5).

Thereafter, if the exhaust gas temperature is increased by the after injection, and if some other certain condition is satisfied, the fuel adding permission flag is set 'ON' (i.e. 'Permitted'; at time t₂ shown in Fig. 5). When the fuel adding permission flag is set 'ON', post injection is started. The post injection is a fuel injection at a timing where the fuel does not ignite further after the after injection.

As shown in Fig. 4, when the post injection is started, first, the first exhaust temperature sensor 821 and the second exhaust temperature sensor 822 detect the first exhaust gas temperature and the second exhaust temperature, respectively (step S1). Upon the first exhaust temperature sensor 821 and the second exhaust temperature sensor 822 detecting the first exhaust gas temperature and the second exhaust gas temperature, respectively, then, the fuel supply amount calculating unit 92 calculates the supply amount (normal injection amount) of the fuel component depending on the first exhaust gas temperature and the second exhaust gas temperature detected by the first exhaust temperature sensor 821 and the second exhaust temperature sensor 822, respectively (step S2; see 'B' in Fig. 5).

As shown in Fig. 4, upon the fuel supply amount calculating unit 92 calculating the supply amount of the fuel component, then the operating state determining unit 91 determines the operating state (step S3). If prescribed conditions including a condition that the first exhaust gas temperature is lower than a prescribed temperature (i.e. T1 shown in Fig. 5) are satisfied, the operating state determining unit 91 determines that the operating state is such that the active state of the oxidation catalyst 811 cannot be maintained ('YES' for step S3) (at time t₃ shown in Fig. 5).

On the other hand, if the prescribed conditions including the condition that the first exhaust gas temperature and the second exhaust gas temperature are lower than prescribed temperatures are satisfied, the operating state determining unit 91 determines that the internal engine is not in an operating state where the active state of the oxidation catalyst 811 cannot be maintained ('NO' for step S3). In this case, as the operating state is such that the active state of the oxidation catalyst 811 is maintainable, the fuel supply amount setting unit 94 set the fuel supply amount (injection amount) to the supply amount (normal injection amount) of the fuel component calculated by the fuel supply amount calculating unit 92 (step S31). Then, the fuel injection control unit 95 performs the post injection with the fuel supply amount set by the fuel supply amount setting unit 94.

Even in the case where the post injection is started, if the operating state determining unit 91 determines that the operating state is such that the active state of the oxidation catalyst 811 cannot be maintained ('YES' for step S3), the low injection amount condition flag is set 'ON' (step S4). When the low injection amount condition flag is set 'ON', the limited fuel supply amount calculating unit 93 calculates the supply amount (low injection amount) of the fuel component under a low injection amount condition (step S5). Then, the limited fuel supply amount calculating unit 93 corrects the supply amount depending on the operating state of the internal combustion engine (e.g. the exhaust gas flow rate) or the operating state of the vehicle (e.g. the vehicle speed) (step S6). For example, the limited fuel supply amount calculating unit 93 calculates a correction factor based on a correction factor map as shown in Fig. 7. The correction factor map of Fig. 7 specifies the relationship between the exhaust gas flow rate or the vehicle speed, and the correction factor. The horizontal axis represents exhaust gas flow rate (L/min) or vehicle speed (km/h), and the vertical axis represents correction factor as to the exhaust gas flow rate (flow rate factor) or correction factor as to the vehicle speed (vehicle speed factor).

A map of the flow rate factor and a map of the vehicle speed factor may be prepared separately, or, one map may include both data for the exhaust gas flow rate and the vehicle speed.

By obtaining the correction factor (e.g. at least 0.5 and less than 1.0) with respect to the exhaust gas flow rate or the vehicle speed, and multiplying the low injection amount by the correction factor, it is possible to calculate the low injection amount depending on the exhaust gas flow rate or the vehicle speed.

The correction factor is defined such that the low injection amount is more limited and the reduction amount becomes larger as the exhaust gas flow rate becomes larger or the vehicle speed becomes higher. For example, the injection amount may be corrected as shown in the portion denoted by 'C' in Fig. 5.

Upon the low injection amount condition flag being set 'ON', the fuel supply amount setting unit 94 compares the fuel supply amount (low injection amount) calculated based on the low injection amount map and corrected depending on the operating state of the vehicle or the operating state of the internal combustion engine, and the fuel supply amount (normal injection amount) calculated by using the constant, and sets the fuel supply amount (injection amount) to the smaller one between the compared fuel supply amounts (steps S7 to S9). Then, the fuel injection control unit 95 performs the post injection with the fuel supply amount set by the fuel supply amount setting unit 94.

When the low injection amount condition flag is set 'ON', it is not always the case that the fuel supply amount is immediately switched to the low injection amount. That is, as shown in Fig. 5, after the low injection amount condition flag is set 'ON', if the relation of Low Injection Amount ≥ Normal Injection Amount is satisfied, the fuel supply amount (injection amount) is set to the normal injection amount (step S9). Then, as the first exhaust gas temperature and the second exhaust gas temperature become lower, the low injection amount becomes fewer, and the relation between the low injection amount and the normal injection amount becomes Low Injection Amount ≤ Normal Injection Amount, that is the magnitude relation between the low injection amount and the normal injection amount changes and the low injection amount becomes smaller than the normal injection amount (t₄ shown in Fig. 5). The fuel supply amount (injection amount) is thereby set to the low injection amount (step S8).

If the first exhaust gas temperature decreases smoothly and if the relation of Low Injection Amount ≤ Normal Injection Amount is kept after the low injection amount becomes smaller than the normal injection amount, the fuel supply amount (injection amount) is continuously set to the low injection amount until the injection amount becomes zero. Depending on the value of the first exhaust gas temperature, the relation as to which one is larger between the low injection amount and the normal injection amount may change more than once. In such a case, the fuel supply amount is set to the smaller one between the low injection amount and the normal injection amount, at each time when the relation changes. Then, when the first exhaust gas temperature and the second exhaust gas temperature decreased to the deactivation temperature, the fuel supply amount is set to zero, and the post injection is stopped (t₅ shown in Fig. 5). In the time chart of Fig. 5, while the regeneration control flag is 'ON', the post injection may be performed again if certain conditions are satisfied.

In the above-described exhaust after treatment apparatus of the embodiment, when the operating state determining unit 91 determines that the internal combustion engine is in an operating state where the active state of the oxidation catalyst 811 is not maintainable, the fuel supply amount setting unit 94 set the fuel supply amount to the smaller one between the supply amount calculated by the fuel supply amount calculating unit 92 and the supply amount calculated by the limited fuel supply amount calculating unit 93. It is thereby possible to efficiently regenerate the particulate collecting filter 812 and to suppress excess of the fuel component even when it is determined that the internal combustion engine is in the operating state where the active state of the oxidation catalyst 811 is not maintainable.

Further, since the limited fuel supply amount calculating unit 93 corrects the supply amount of the fuel component depending on the operating state of the internal combustion engine, it is possible to adjust the supply amount of the fuel component depending on the operating state of the internal combustion engine.

Further, since the limited fuel supply amount calculating unit 93 corrects the supply amount of the fuel component with the flow rate factor which corresponds to the exhaust gas flow rate detected by the exhaust gas flow rate detecting device, it is possible to adjust the supply amount of the fuel component depending on increase or decrease in the exhaust gas flow rate.

In a case where the internal combustion engine functions as a motor as a driving source of a vehicle, not as a power generator, there is a specific relationship between the vehicle speed and the operating state of the internal combustion engine. Therefore, since the limited fuel supply amount calculating unit 93 corrects the supply amount of the fuel component with the vehicle factor which corresponds to the vehicle speed, it is possible to adjust the supply amount of the fuel component depending on the operating state of the internal combustion engine which may vary depending on increase and decrease of the vehicle speed.

Further, since the limited fuel supply amount calculating unit 93 which functions as the fuel supply stopping unit stops supply of the fuel component when the exhaust gas temperature detected by the exhaust gas temperature detecting device is lower than the temperature where the oxidation catalyst 811 is deactivated, supply of the fuel component is stopped when the oxidation catalyst 811 is inactive.

According to the exhaust after treatment apparatus of the embodiment, the low injection amount is corrected with the factor (correction factor) associated with the exhaust gas flow amount detected by the exhaust gas flow rate detecting device 83, or with a factor (correction factor) associated with the vehicle speed measured by the vehicle speed measuring unit 101. However, the present invention is by no means limited to this embodiment. For example, the correction may be made with a factor associated with the rotational speed or the load of the diesel engine, or with a factor associated with an environmental condition measured by the intake air temperature measuring device 75 or the atmospheric pressure measuring device 86. In the above embodiment, the first exhaust gas temperature and the second exhaust gas temperature are used for the calculation by the limited fuel injection amount calculating unit. However, the present invention is not limited to the embodiment, and the third exhaust gas temperature may be used for the calculation.

### Industrial Applicability

As described above, by the exhaust after treatment apparatus according to the present invention, it is possible to efficiently regenerate the exhaust after treatment device and to suppress excess of the fuel component even when it is determined that the operating state is such that the active state of the exhaust after treatment device is not maintainable. Therefore it is widely applicable to exhaust after treatment apparatuses for an internal combustion engine where fuel component is combusted in the exhaust after treatment device to regenerate the exhaust after treatment device.

## Claims

1. An exhaust after treatment apparatus for an internal combustion engine, comprising: an exhaust after treatment device (81) provided on an exhaust passage (8); and a fuel supplying device (4) for supplying a fuel component to the exhaust after treatment device (81), the fuel supplying device (4) being configured to perform a post injection by supplying the fuel component into a cylinder at a timing where fuel does not ignite, the exhaust after treatment apparatus being configured to perform temperature increasing control of the exhaust after treatment device (81) by supplying the fuel component,
wherein the exhaust after treatment apparatus further comprises:
an exhaust gas temperature detecting device (82) for detecting an exhaust gas temperature in the exhaust passage (8);
an operating state determining unit (91) configured, when given conditions including a condition that the exhaust gas temperature is lower than a given temperature are satisfied, to determine that the internal combustion engine is in an operating state where an active state of the exhaust after treatment device (81) is not maintainable, after supply of a fuel component in a supply amount calculated by a fuel supply amount calculating unit (92) during the temperature increasing control;
the fuel supply amount calculating unit (92) configured to calculate the supply amount of the fuel component for the temperature increasing control so that the supply amount becomes larger as the exhaust gas temperature detected by the exhaust gas temperature detecting device (82) becomes lower during the temperature increasing control;
a limited fuel supply amount calculating unit (93) configured to calculate and decrease a limited supply amount of the fuel component for the temperature increasing control when the operation state determining unit (91) determines that the internal combustion engine is in the operation condition where active state of the exhaust after treatment device (81) is not maintainable so that the limited supply amount becomes smaller as the exhaust gas temperature detected by the exhaust gas temperature detecting device (82) becomes lower during the temperature increasing control; and
a fuel supply amount setting unit (94) for setting a supply amount of the fuel component to be supplied by the fuel supplying device (4) on the basis of the supply amount calculated by the fuel supply amount calculating unit (92) and the limited supply amount calculated by the limited fuel supply amount calculating unit (93), and
wherein the fuel supply amount setting unit (94) is configured to set the supply amount of the fuel component to be supplied to the smaller one between the supply amount calculated by the fuel supply amount calculating unit (92) and the limited supply amount calculated by the limited fuel supply amount calculating unit (93) when the operating state determining unit (91) determines that the internal combustion engine is in the operating state where the active state of the exhaust after treatment device (81) is not maintainable during the temperature increasing control.

2. The exhaust after treatment apparatus for an internal combustion engine according to claim 1, wherein the limited fuel supply amount calculating unit (93) is configured to correct the supply amount of the fuel component depending on the operating state of the internal combustion engine.

3. The exhaust after treatment apparatus for an internal combustion engine according to claim 2, further comprising an exhaust gas flow rate detecting device (83) for detecting an exhaust gas flow rate in the exhaust passage (8),
wherein the limited fuel supply amount calculating unit (93) is configured to correct the supply amount of the fuel composition with a flow rate factor corresponding to the exhaust gas flow rate detected by the exhaust gas flow rate detecting device (83).

4. The exhaust after treatment apparatus for an internal combustion engine according to claim 2 or 3, wherein the limited fuel supply amount calculating unit (93) is configured to correct the supply amount of the fuel component with a vehicle speed factor corresponding to a speed of a vehicle having the internal combustion engine.

5. The exhaust after treatment apparatus for an internal combustion engine according to any one of claims 1 to 4, further comprising a fuel supply stopping unit for stopping supply of the fuel component by the fuel supplying device (4),
wherein the fuel supply sopping unit is configured to stop supply of the fuel component when the exhaust gas temperature detected by the exhaust gas temperature detecting device (82) is lower than an exhaust gas temperature at which the exhaust after treatment device (81) becomes inactive.

6. The exhaust after treatment apparatus for an internal combustion engine according to claim 3, wherein the supply amount of the fuel component is corrected so that a reduction amount of the fuel component becomes larger as the exhaust gas flow rate becomes higher.

7. The exhaust after treatment apparatus for an internal combustion engine according to claim 4, wherein the supply amount of the fuel component is corrected so that a reduction amount of the fuel component becomes larger as the vehicle speed becomes higher.

## Patentansprüche

1. Abgasnachbehandlungsanlage für einen Verbrennungsmotor, die aufweist: eine Abgasnachbehandlungsvorrichtung (81), die an einem Abgaskanal (8) vorgesehen ist; und eine Kraftstoffzufuhrvorrichtung (4) zum Zuführen einer Kraftstoffkomponente zur Abgasnachbehandlungsvorrichtung (81), wobei die Kraftstoffzufuhrvorrichtung (4) so konfiguriert ist, dass sie eine Nacheinspritzung durch Zuführen der Kraftstoffkomponente in einen Zylinder zu einer Zeit durchführt, zu der Kraftstoff nicht zündet, und die Abgasnachbehandlungsanlage so konfiguriert ist, dass sie eine Temperaturanstiegssteuerung der Abgasnachbehandlungsvorrichtung (81) durch Zuführen der Kraftstoffkomponente durchführt,
wobei die Abgasnachbehandlungsanlage ferner aufweist:
eine Abgastemperatur-Detektionsvorrichtung (82) zum Detektieren einer Abgastemperatur im Abgaskanal (8);
eine Betriebszustands-Bestimmungseinheit (91), die bei Erfüllung vorgegebener Bedingungen, darunter eine Bedingung, dass die Abgastemperatur niedriger als eine vorgegebene Temperatur ist, so konfiguriert ist, dass sie bestimmt, dass sich der Verbrennungsmotor in einem Betriebszustand befindet, in dem ein aktiver Zustand der Abgasnachbehandlungsvorrichtung (81), nach Zufuhr einer Kraftstoffkomponente in einer Zufuhrmenge, die durch eine Kraftstoffzufuhrmengen-Berechnungseinheit (92) während der Temperaturanstiegssteuerung berechnet wird, nicht aufrecht zu erhalten ist;
wobei die Kraftstoffzufuhrmengen-Berechnungseinheit (92) so konfiguriert ist, dass sie die Zufuhrmenge der Kraftstoffkomponente für die Temperaturanstiegssteuerung so berechnet, dass die Zufuhrmenge größer wird, wenn die durch die Abgastemperatur-Detektionsvorrichtung (82) detektierte Abgastemperatur während der Temperaturanstiegssteuerung niedriger wird;
eine begrenzte Kraftstoffzufuhrmengen-Berechnungseinheit (93), die so konfiguriert ist, dass sie eine begrenzte Zufuhrmenge der Kraftstoffkomponente für die Temperaturanstiegssteuerung berechnet und verringert, wenn die Betriebszustands-Bestimmungseinheit (91) bestimmt, dass sich der Verbrennungsmotor im Betriebszustand befindet, in dem der aktive Zustand der Abgasnachbehandlungsvorrichtung (81) nicht aufrecht zu erhalten ist, so dass die begrenzte Zufuhrmenge kleiner wird, wenn die durch die Abgastemperatur-Detektionsvorrichtung (82) detektierte Abgastemperatur während der Temperaturanstiegssteuerung niedriger wird; und
eine Kraftstoffzufuhrmengen-Einstelleinheit (94) zum Einstellen einer Zufuhrmenge der Kraftstoffkomponente, die durch die Kraftstoffzufuhrvorrichtung (4) zuzuführen ist, auf der Grundlage der Zufuhrmenge, die durch die Kraftstoffzufuhrmengen-Berechnungseinheit (92) berechnet wird, und der begrenzten Zufuhrmenge, die durch die begrenzte Kraftstoffzufuhrmengen-Berechnungseinheit (93) berechnet wird, und
wobei die Kraftstoffzufuhrmengen-Einstelleinheit (94) so konfiguriert ist, dass sie die Zufuhrmenge der zuzuführenden Kraftstoffkomponente auf die kleinere zwischen der durch die Kraftstoffzufuhrmengen-Berechnungseinheit (92) berechneten Zufuhrmenge und der durch die begrenzte Kraftstoffzufuhrmengen-Berechnungseinheit (93) berechneten begrenzten Zufuhrmenge einstellt, wenn die Betriebszustands-Bestimmungseinheit (91) bestimmt, dass sich der Verbrennungsmotor im Betriebszustand befindet, in dem der aktive Zustand der Abgasnachbehandlungsvorrichtung (81) während der Temperaturanstiegssteuerung nicht aufrecht zu erhalten ist.

2. Abgasnachbehandlungsanlage für einen Verbrennungsmotor nach Anspruch 1, wobei die begrenzte Kraftstoffzufuhrmengen-Berechnungseinheit (93) so konfiguriert ist, dass sie die Zufuhrmenge der Kraftstoffkomponente in Abhängigkeit vom Betriebszustand des Verbrennungsmotors korrigiert.

3. Abgasnachbehandlungsanlage für einen Verbrennungsmotor nach Anspruch 2, ferner mit einer Abgasvolumenstrom-Detektionsvorrichtung (83) zum Detektieren eines Abgasvolumenstroms im Abgaskanal (8),
wobei die begrenzte Kraftstoffzufuhrmengen-Berechnungseinheit (93) so konfiguriert ist, dass sie die Zufuhrmenge der Kraftstoffkomponente mit einem Volumenstromfaktor in Entsprechung zum Abgasvolumenstrom korrigiert, der durch die Abgasvolumenstrom-Detektionsvorrichtung (83) detektiert wird.

4. Abgasnachbehandlungsanlage für einen Verbrennungsmotor nach Anspruch 2 oder 3, wobei die begrenzte Kraftstoffzufuhrmengen-Berechnungseinheit (93) so konfiguriert ist, dass sie die Zufuhrmenge der Kraftstoffkomponente mit einem Fahrzeuggeschwindigkeitsfaktor in Entsprechung zu einer Geschwindigkeit eines Fahrzeugs mit dem Verbrennungsmotor korrigiert.

5. Abgasnachbehandlungsanlage für einen Verbrennungsmotor nach einem der Ansprüche 1 bis 4, ferner mit einer Kraftstoffzufuhr-Stoppeinheit zum Stoppen der Zufuhr der Kraftstoffkomponente durch die Kraftstoffzufuhrvorrichtung (4),
wobei die Kraftstoffzufuhr-Stoppeinheit so konfiguriert ist, dass sie die Zufuhr der Kraftstoffkomponente stoppt, wenn die durch die Abgastemperatur-Detektionsvorrichtung (82) detektierte Abgastemperatur niedriger als eine Abgastemperatur ist, bei der die Abgasnachbehandlungsvorrichtung (81) inaktiv wird.

6. Abgasnachbehandlungsanlage für einen Verbrennungsmotor nach Anspruch 3, wobei die Zufuhrmenge der Kraftstoffkomponente so korrigiert wird, dass ein Reduktionsbetrag der Kraftstoffkomponente größer wird, wenn der Abgasvolumenstrom höher wird.

7. Abgasnachbehandlungsanlage für einen Verbrennungsmotor nach Anspruch 4, wobei die Zufuhrmenge der Kraftstoffkomponente so korrigiert wird, dass ein Reduktionsbetrag der Kraftstoffkomponente größer wird, wenn die Fahrzeuggeschwindigkeit höher wird.

## Revendications

1. Appareil de post-traitement des gaz d'échappement pour un moteur à combustion interne, comprenant: un dispositif de post-traitement des gaz d'échappement (81) prévu sur un passage d'échappement (8) ; et un dispositif d'alimentation en carburant (4) pour fournir un composant de carburant au dispositif de post-traitement des gaz d'échappement (81), le dispositif d'alimentation en carburant (4) étant configuré pour réaliser une post-injection en fournissant le composant de carburant dans un cylindre à un moment où le carburant ne s'allume pas, l'appareil de post-traitement des gaz d'échappement étant configuré pour réaliser une commande d'augmentation de température du dispositif de post-traitement des gaz d'échappement (81) en fournissant le composant de carburant,
dans lequel l'appareil de post-traitement des gaz d'échappement comprend en outre :
un dispositif de détection de température de gaz d'échappement (82) pour détecter une température de gaz d'échappement dans le passage d'échappement (8) ;
une unité de détermination d'état de fonctionnement (91) configurée, lorsque des conditions données incluant une condition où la température de gaz d'échappement est inférieure à une température donnée sont satisfaites, pour déterminer que le moteur à combustion interne est dans un état de fonctionnement où un état actif du dispositif de post-traitement des gaz d'échappement (81) ne peut pas être conservé, après fourniture d'un composant de carburant dans une quantité d'alimentation calculée par une unité de calcul de quantité d'alimentation en carburant (92) pendant la commande d'augmentation de température ;
l'unité de calcul de quantité d'alimentation en carburant (92) est configurée pour calculer la quantité d'alimentation du composant de carburant pour la commande d'augmentation de température de sorte que la quantité d'alimentation devienne plus grande lorsque la température de gaz d'échappement détectée par le dispositif de détection de température de gaz d'échappement (82) devient inférieure pendant la commande d'augmentation de température ;
une unité de calcul de quantité d'alimentation en carburant limitée (93) configurée pour calculer et diminuer une quantité d'alimentation limitée du composant de carburant pour la commande d'augmentation de température lorsque l'unité de détermination d'état de fonctionnement (91) détermine que le moteur à combustion interne est dans la condition de fonctionnement où un état actif du dispositif de post-traitement des gaz d'échappement (81) ne peut pas être conservé de sorte que la quantité d'alimentation limitée devienne plus petite lorsque la température de gaz d'échappement détectée par le dispositif de détection de température de gaz d'échappement (82) devient inférieure pendant la commande d'augmentation de température ; et
une unité de réglage de quantité d'alimentation en carburant (94) pour régler une quantité d'alimentation du composant de carburant à fournir par le dispositif d'alimentation en carburant (4) sur la base de la quantité d'alimentation calculée par l'unité de calcul de quantité d'alimentation en carburant (92) et la quantité d'alimentation limitée calculée par l'unité de calcul de quantité d'alimentation en carburant limitée (93), et
dans lequel l'unité de réglage de quantité d'alimentation en carburant (94) est configurée pour régler la quantité d'alimentation du composant de carburant à fournir sur la plus petite entre la quantité d'alimentation calculée par l'unité de calcul de quantité d'alimentation en carburant (92) et la quantité d'alimentation limitée calculée par l'unité de calcul de quantité d'alimentation en carburant limitée (93) lorsque l'unité de détermination d'état de fonctionnement (91) détermine que le moteur à combustion interne est dans l'état de fonctionnement où l'état actif du dispositif de post-traitement des gaz d'échappement (81) ne peut pas être conservé pendant la commande d'augmentation de température.

2. Appareil de post-traitement des gaz d'échappement pour un moteur à combustion interne selon la revendication 1, dans lequel l'unité de calcul de quantité d'alimentation en carburant limitée (93) est configurée pour corriger la quantité d'alimentation du composant de carburant selon l'état de fonctionnement du moteur à combustion interne.

3. Appareil de post-traitement des gaz d'échappement pour un moteur à combustion interne selon la revendication 2, comprenant en outre un dispositif de détection de débit de gaz d'échappement (83) pour détecter un débit de gaz d'échappement dans le passage d'échappement (8),
dans lequel l'unité de calcul de quantité d'alimentation en carburant limitée (93) est configurée pour corriger la quantité d'alimentation de la composition de carburant avec un facteur de débit correspondant au débit de gaz d'échappement détecté par le dispositif de détection de débit de gaz d'échappement (83).

4. Appareil de post-traitement des gaz d'échappement pour un moteur à combustion interne selon la revendication 2 ou 3, dans lequel l'unité de calcul de quantité d'alimentation en carburant limitée (93) est configurée pour corriger la quantité d'alimentation du composant de carburant avec un facteur de vitesse de véhicule correspondant à une vitesse d'un véhicule doté du moteur à combustion interne.

5. Appareil de post-traitement des gaz d'échappement pour un moteur à combustion interne selon l'une quelconque des revendications 1 à 4, comprenant en outre une unité d'arrêt d'alimentation en carburant pour arrêter l'alimentation du composant de carburant par le dispositif d'alimentation en carburant (4),
dans lequel l'unité d'arrêt d'alimentation en carburant est configurée pour arrêter l'alimentation du composant de carburant lorsque la température de gaz d'échappement détectée par le dispositif de détection de température de gaz d'échappement (82) est inférieure à une température de gaz d'échappement à laquelle le dispositif de post-traitement des gaz d'échappement (81) devient inactif.

6. Appareil de post-traitement des gaz d'échappement pour un moteur à combustion interne selon la revendication 3, dans lequel la quantité d'alimentation du composant de carburant est corrigée de sorte qu'une quantité de réduction du composant de carburant devienne plus grande lorsque le débit de gaz d'échappement devient plus élevé.

7. Appareil de post-traitement des gaz d'échappement pour un moteur à combustion interne selon la revendication 4, dans lequel la quantité d'alimentation du composant de carburant est corrigée de sorte qu'une quantité de réduction du composant de carburant devienne plus grande lorsque la vitesse de véhicule devient plus élevée.
